# FASCICULE DE BREVET EUROPEEN

(11) **EP 4 599 205 B1**
(45) Date de publication et mention de la délivrance du brevet: **02.09.2026**
(21) Numéro de dépôt: 22818013.9
(22) Date de dépôt: 16.11.2022
(51) Int. Cl.: F28D 15/04, B64G 1/50, F28D 15/06

(54) **STRUCTURE DIPHASIQUE À SENS UNIQUE DE TRANSFERT THERMIQUE**
UNIDIREKTIONALE ZWEIPHASEN-WÄRMEÜBERTRAGUNGSSTRUKTUR
TWO-PHASE UNIDIRECTIONAL HEAT TRANSFER STRUCTURE

(43) Date de publication de la demande: 13.08.2025
(73) Titulaire: Airbus Defence and Space SAS, 31402 Toulouse Cedex 4 (FR)
(72) Inventeur: FIGUS, Christophe, 31402 Toulouse (FR); CARPONCIN, Delphine, 31402 Toulouse Cedex 4 (FR)
(74) Mandataire: Plasseraud IP
(86) Numéro de dépôt international: PCT/EP2022/082082
(87) Numéro de publication internationale: WO 2024/104573

(56) Documents cités:
- DE-A1- 102016 201 912
- FR-A1- 2 328 930
- US-A- 4 220 195
- US-A- 5 332 030
- US-A- 5 771 967
- US-A1- 2007 240 852

## Description

### Domaine technique

La présente divulgation concerne une structure diphasique de transfert thermique contenant un fluide diphasique en circulation entre une source froide et une source chaude. La présente divulgation trouve une application particulière dans le domaine spatial, notamment pour le contrôle thermique d'équipements d'un engin spatial susceptibles de générer de la chaleur.

### Technique antérieure

Dans des applications au domaine spatial, ce type de dispositif de transfert de chaleur est utilisé pour le contrôle thermique des équipements embarqués dans l'engin spatial. En effet, un engin spatial, par exemple un satellite ou un véhicule spatial ou encore une station spatiale, peut comprendre plusieurs équipements qui génèrent, lors de leur fonctionnement, de la chaleur, et qui nécessitent d'être refroidis. Pour certains équipements tels que des équipements d'observation, le maintien d'une température constante de l'équipement est d'une grande importance pour maintenir le bon fonctionnement et la précision de l'équipement, ce qui implique donc d'évacuer efficacement la chaleur générée. Il est donc connu, par exemple du document EP3003860, d'utiliser des dispositifs de transfert thermique diphasiques afin de relier un ou plusieurs équipements susceptibles de générer de la chaleur, et dont la chaleur doit être évacuée, à un radiateur qui est externe à l'engin spatial et qui peut évacuer la chaleur dans l'espace par radiation. Dans ce cas, le ou les équipements correspondent à la source chaude mentionnée ci-avant, et l'espace correspond à la source froide.

Les radiateurs sont généralement positionnés sur la surface extérieure de l'engin spatial de sorte à rester autant que possible à l'abri du rayonnement solaire pour ne pas subir d'élévation de température. Toutefois, un satellite d'observation peut être incliné pour observer certaines zones et alors exposer les radiateurs. Sélectionner des radiateurs faiblement ensoleillés peut ainsi s'avérer incompatible du positionnement de l'instrument dans le satellite. Le refroidissement généré par le caloduc est alors dégradé voire inopérant et pourrait même entraîner une dégradation, un dérèglement ou un dysfonctionnement des équipements de l'engin spatial.

Le document US 5,771,967 décrit un dispositif de transfert de chaleur pour un engin spatial comprenant une mèche coulissante portée par une tige de contrôle sensible à la température. Lorsque la température du dispositif augmente, la dilatation de la tige de contrôle déplace la mèche et permet à un liquide de transfert de chaleur de circuler par capillarité via la mèche.

Le document US 4,220,195 décrit un dispositif de transfert thermique comprenant un milieu capillaire pourvu d'une discontinuité. Des électrodes sont utilisées pour créer un effet de pompage s'ajoutant à l'effet capillaire.

### Résumé

A cet égard, la présente divulgation a pour but de proposer une structure diphasique de transfert de chaleur utilisable en contexte spatial et permettant de protéger les équipements de l'engin spatial embarquant la structure et les équipements en cas d'élévation de température d'un équipement servant de source froide.

Un autre but de la présente divulgation est d'assurer la stabilité thermique des équipements refroidis par la structure de transfert de chaleur.

A cet égard, il est proposé une structure diphasique de transfert de chaleur à sens unique de fonctionnement.

Plus particulièrement, il est proposé une structure de transfert de chaleur, apte à fonctionner en environnement spatial, réalisant un contrôle thermique pour au moins un composant disposé sur au moins une interface, comprenant :
- au moins une première cavité de transport d'énergie calorifique entre au moins une source chaude et une source froide, ladite première cavité, fermée de façon étanche, comprenant au moins un canal de circulation de vapeur et au moins une première structure capillaire ayant un volume total déterminé et ayant une dimension capillaire plus petite que ledit canal de circulation de vapeur, ladite première cavité recevant un premier matériau diphasique comprenant une phase liquide et une phase vapeur et
- au moins un radiateur en liaison thermique avec la cavité apte à constituer ladite source froide dans au moins une première position de faible éclairage par rapport aux rayons du soleil,
- au moins ladite interface apte à constituer ladite source chaude dans ladite première position,

la structure de transfert de chaleur étant caractérisée en ce que ladite première structure capillaire comprend au moins une discontinuité capillaire ayant une dimension capillaire plus grande que celle de la première structure capillaire et étant apte à être comblée par un bouchon liquide en excès de premier matériau diphasique dans au moins ladite première position, le bouchon liquide en excès libérant ladite discontinuité capillaire dans au moins une deuxième position de fort éclairage dudit radiateur par rapport aux rayons du soleil de façon à interrompre au moins partiellement la circulation du premier matériau diphasique,
le premier matériau étant présent selon une quantité déterminée de façon à toujours avoir entre un volume minimum et un volume maximum de liquide en excédent par rapport au volume total de la première structure capillaire, dans une plage fonctionnelle de températures déterminée, et de façon à ce que le volume maximum de liquide en excédent, disposé dans une zone attenante à ladite source froide, au moins dans ladite première position, comprenne et remplisse ladite discontinuité capillaire, tandis que le volume minimum de liquide en excédent, disposé dans une zone attenante à ladite source chaude, au moins dans ladite deuxième position, libère ladite discontinuité capillaire pour former une discontinuité et interrompe la circulation du premier matériau diphasique en phase liquide.

En effet, à des températures basses, correspondant à un faible éclairage du radiateur, l'excès de liquide, désigné par bouchon, se situe du côté du radiateur qui constitue un point froid. La pression de vapeur saturante est alors plus faible et comprend moins de molécules vapeur tandis que le bouchon liquide présente un volume maximum. A l'inverse à des températures hautes, correspondant à un fort éclairage du radiateur, le bouchon se situe à l'opposé du radiateur, le lien capillaire étant coupé. La pression de vapeur saturante est alors plus importante et comprend plus de molécules de vapeur tandis que le bouchon liquide présente un volume minimum.

La géométrie de la première cavité est donc choisie en fonction des volumes du bouchon. Des marges de sécurité sont par exemple prévues lors du dimensionnement. Par sécurité, on pourrait, par exemple, prévoir qu'un volume minimum de liquide en excédent, disposé dans une zone attenante à ladite source froide, au moins dans ladite première position, puisse comprendre et remplir ladite discontinuité capillaire, tandis qu'un volume maximum de liquide en excédent, disposé dans une zone attenante à ladite source chaude, au moins dans ladite deuxième position, puisse libérer ladite discontinuité capillaire.

Dans des modes de réalisations, ladite première structure capillaire de ladite première cavité est monobloc. La partie monobloc est par exemple réalisée par fabrication additive dite ALM. La première cavité ne comprend pas notamment de partie mobile.

Dans des modes de réalisation, ladite discontinuité capillaire est disposée entre ladite source chaude et ladite source froide.

Dans des modes de réalisation, la première structure capillaire comprend une première portion capillaire attenante audit radiateur et une deuxième portion capillaire, lesdites portions étant situées de part et d'autre de la discontinuité capillaire.

Dans des modes de réalisation, la discontinuité capillaire est formée par une rainure s'étendant sur toute une section de la première structure capillaire.

Dans des modes de réalisation, ladite rainure est en communication de fluide avec le canal de circulation de vapeur lorsqu'elle n'est remplie par le bouchon liquide.

Dans des modes de réalisation, la structure comprend en outre au moins une deuxième cavité de stockage d'énergie calorifique, fermée de façon étanche et recevant un deuxième matériau diphasique, comprenant une phase liquide et une phase solide ou une phase liquide et une phase gazeuse, ladite deuxième cavité étant disposée en aval de ladite discontinuité capillaire par rapport au radiateur.

Dans des modes de réalisation, la structure comprend une paroi délimitant ladite deuxième cavité, la paroi étant formée en un matériau thermiquement conducteur, et la deuxième cavité comprend un treillis en matériau thermiquement conducteur en continuité thermique avec ladite paroi, ledit treillis comprenant un agencement en trois dimensions d'éléments unitaires reliés les uns aux autres et délimitant entre eux une pluralité d'interstices, ledit treillis étant noyé dans ledit deuxième matériau diphasique remplissant les interstices du treillis.

Dans des modes de réalisation, ledit composant est disposé sur son interface en contact thermique avec la première cavité de transfert d'énergie calorifique et est également situé au voisinage de ladite deuxième cavité de stockage d'énergie calorifique.

Dans des modes de réalisation, la structure comprend une pluralité de deuxièmes cavités de stockage d'énergie calorifique respectivement pour une pluralité de composants chacun disposé sur son interface.

Selon un autre objet, la présente porte sur un engin spatial comprenant au moins un composant et une structure de transfert de chaleur selon la description qui précède pour évacuer la chaleur générée par ledit composant.

Selon un autre objet, il est proposé une structure de transfert de chaleur, apte à fonctionner en environnement spatial, réalisant un contrôle thermique pour au moins un composant disposé sur au moins une interface, comprenant :
- au moins une première cavité de transport d'énergie calorifique entre au moins une source chaude et une source froide, ladite première cavité, fermée de façon étanche, comprenant au moins un canal de circulation de vapeur et au moins une première structure capillaire ayant une dimension capillaire plus petite que ledit canal de circulation de vapeur, ladite première cavité recevant un premier matériau diphasique comprenant une phase liquide et une phase vapeur et
- au moins un radiateur en liaison thermique avec la cavité apte à constituer ladite source froide dans au moins une première position par rapport aux rayons du soleil,
- au moins ladite interface apte à constituer ladite source chaude dans ladite première position,
la structure de transfert de chaleur étant caractérisée en ce que ladite première structure capillaire de ladite première cavité comprend au moins une discontinuité capillaire ayant une dimension capillaire plus grande que celle de la première structure capillaire et étant apte à être comblée par un bouchon liquide en excès de premier matériau diphasique dans au moins ladite première position, le bouchon liquide en excès libérant ladite discontinuité capillaire dans au moins une deuxième position par rapport aux rayons du soleil de façon à interrompre au moins partiellement la circulation du premier matériau diphasique, la structure de transfert de chaleur comprenant en outre au moins une deuxième cavité de stockage d'énergie calorifique, fermée de façon étanche et recevant un deuxième matériau diphasique, comprenant une phase liquide et une phase solide ou une phase liquide et une phase gazeuse, ladite deuxième cavité étant disposée en aval de ladite discontinuité capillaire par rapport au radiateur.

La structure de transfert de chaleur proposée présente un fonctionnement de type diode thermique, c'est-à-dire que cette structure n'opère un transfert de chaleur que dans un seul sens, quand la première zone d'échange thermique correspond à la source chaude et que la deuxième zone d'échange thermique correspond à la source froide. De cette façon, lorsque la structure est embarquée sur un engin spatial et que le radiateur est exposé au rayonnement solaire, cette exposition provoque une élévation de température pouvant amener le radiateur à présenter une température supérieure à celle des équipements de l'engin spatial. Dans ce cas, le radiateur correspond donc à la source chaude et, la structure de transfert thermique étant conformée pour interdire un transfert thermique depuis la deuxième zone d'échange thermique vers la première zone d'échange thermique, elle empêche un échauffement des instruments. Le contrôle thermique des instruments est donc amélioré.

Le fonctionnement de diode thermique est permis par une discontinuité de la structure capillaire au voisinage du radiateur, cette discontinuité pouvant être remplie par un bouchon liquide lorsque le radiateur correspond à la source froide de la structure et donc à une zone de condensation. Lorsque le radiateur correspond à la source chaude, la deuxième zone d'échange thermique correspond à une zone d'évaporation, et le bouchon liquide s'assèche dans la discontinuité de structure capillaire. La discontinuité capillaire empêche alors la phase liquide du fluide contenu dans la structure capillaire d'être acheminé jusqu'à la zone d'échange thermique chaude.

La structure de transfert de chaleur peut également comprendre une ou plusieurs zones de stockage thermique permettant en outre d'absorber un pic de chaleur générée par les composants même dans le cas où aucun transfert thermique n'a lieu au sein de la structure.

Ainsi l'invention peut avantageusement intégrer plusieurs fonctions thermiques telles que le transport, la fonction de diode et éventuellement la fonction de stockage dont la combinaison avec la fonction de diode s'avère particulièrement utile dans une configuration d'interruption du transport de chaleur.

Avantageusement encore l'efficacité du transport de chaleur vers le radiateur est améliorée lors du contrôle thermique d'un composant spatial.

Un avantage est également de favoriser la stabilité géométrique de l'instrument, par exemple par un positionnement des capteurs CCD dans un instrument optique favorisant ainsi la qualité de l'image. L'invention permet en outre de disposer d'une structure monobloc à forte conductivité thermique et faible dilatation thermique dans laquelle le nombre des surfaces d'interfaces est limité, un nombre important de surfaces d'interfaces ayant en effet tendance à favoriser les gradients thermiques.

Un avantage est encore de favoriser une stabilité thermique de l'instrument lors de la prise d'image, en intégrant dans la structure un matériau à changement de phase solide-liquide favorisant l'amortissement des pics de dissipations.

Un autre avantage est aussi de favoriser la stabilité thermique de l'instrument et de ses composants en limitant les entrées de flux solaire par le radiateur quand celui-ci est illuminé. Grâce à l'invention, on évite ainsi une consommation de la chaleur latente des matériaux à changement de phase pendant cette période où le radiateur est illuminé, gui ne serait alors plus disponible par la suite pendant une prise d'image.

### Brève description des dessins

D'autres caractéristiques, détails et avantages apparaîtront à la lecture de la description détaillée ci-après, et à l'analyse des dessins annexés, sur lesquels :
**Fig. 1**

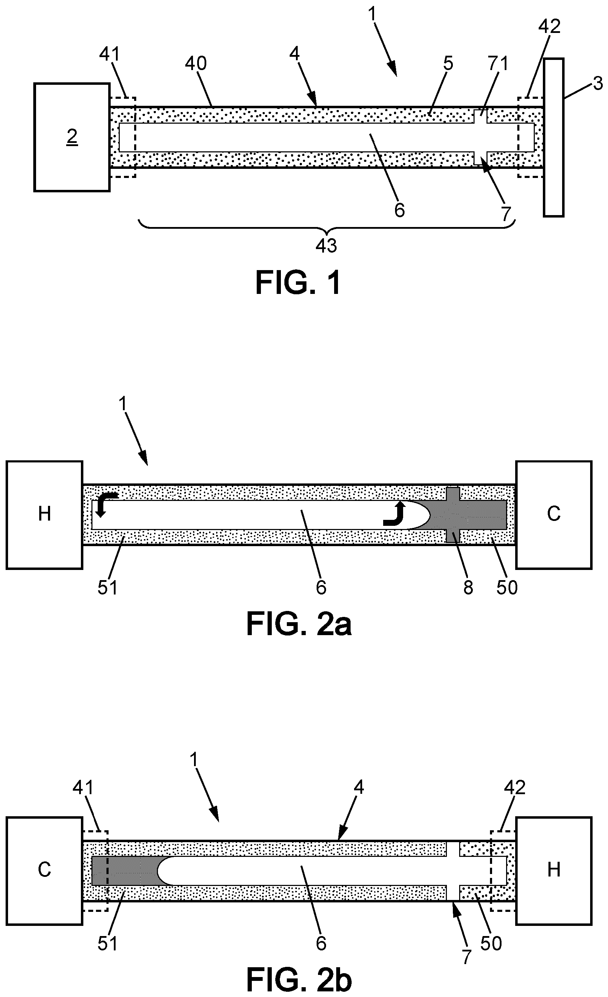

   [Fig. 1] représente schématiquement un exemple de structure de transfert de chaleur selon l'invention.
**Fig. 2a**
   [Fig. 2a] représente schématiquement le fonctionnement d'une structure de transfert de chaleur lorsque la première zone d'échange thermique correspond à une zone d'évaporation et la deuxième zone d'échange thermique correspond à une zone de condensation.
**Fig. 2b**
   [Fig. 2b] représente schématiquement le fonctionnement d'une structure de transfert de chaleur lorsque la première zone d'échange thermique correspond à une zone de condensation et la deuxième zone d'échange thermique correspond à une zone d'évaporation.
**Fig. 3**

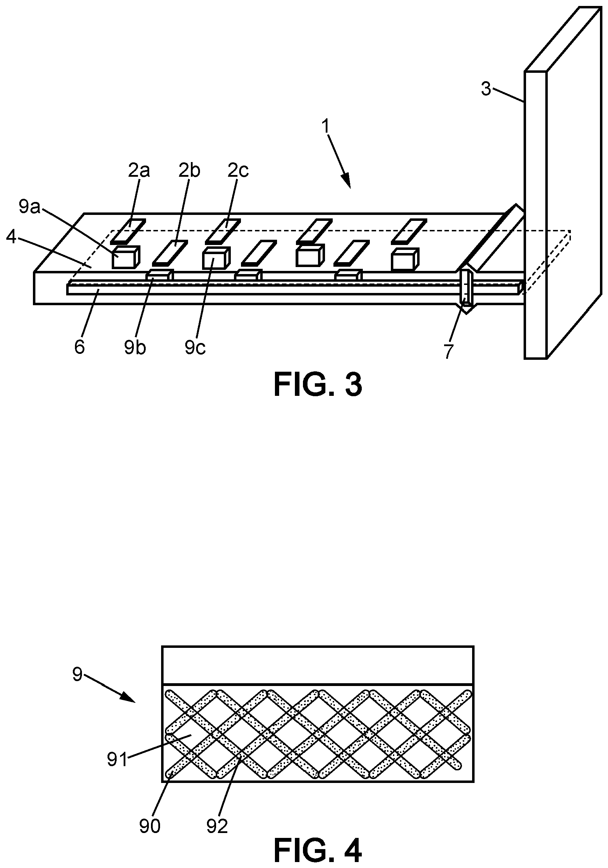

   [Fig. 3] représente schématiquement une structure de transfert de chaleur selon un autre mode de réalisation.
**Fig. 4**
   [Fig. 4] représente un exemple de treillis.
**Fig. 5**

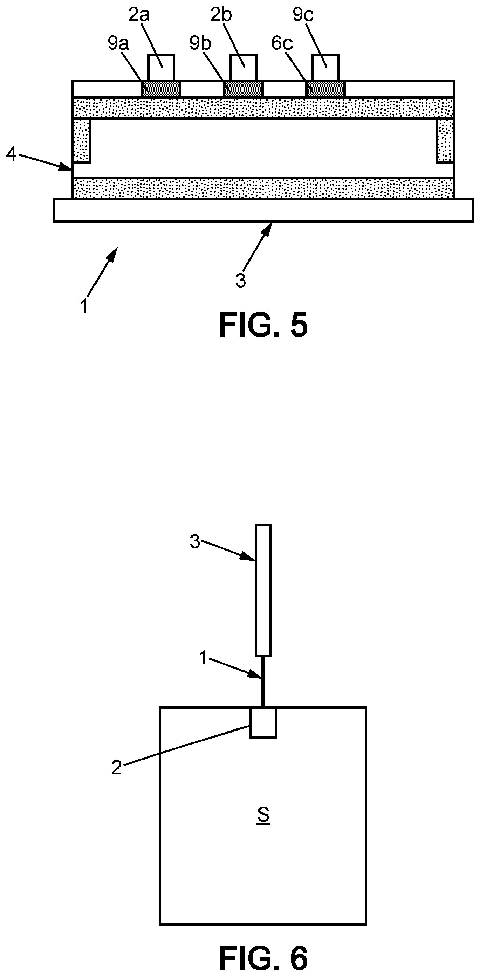

   [Fig. 5] représente schématiquement un exemple de structure de transfert de chaleur selon l'invention.
**Fig. 6**
   [Fig. 6] représente schématiquement un engin spatial comprenant une structure de transfert de chaleur.

### Description des modes de réalisation

Il est maintenant fait référence à la figure 1, qui représente schématiquement un exemple de structure 1 de transfert de chaleur. Cette structure de transfert de chaleur peut notamment être mise en oeuvre pour le contrôle thermique d'au moins un composant 2 d'un engin spatial S lors de son fonctionnement en environnement spatial. Par « espace » ou « environnement spatial » on désigne la partie de l'univers située au-delà de l'atmosphère terrestre. L'engin spatial S, illustré schématiquement en figure 6, peut par exemple être un satellite, un véhicule spatial, ou une structure d'habitation située dans l'espace. Un tel engin spatial comprend classiquement un ou plusieurs composants 2 dont le fonctionnement est susceptible de générer de la chaleur qui doit être évacuée vers l'espace. De tels composants peuvent par exemple comprendre des capteurs, par exemple capteurs optiques CCD, des antennes, ou encore des composants électroniques tels que processeurs, circuits imprimés, mémoires, etc.

La structure 1 comprend une première cavité 4 de transport d'énergie calorifique, cette cavité étant fermée hermétiquement par une paroi 40, et contenant un matériau diphasique, par exemple un fluide diphasique à saturation comprenant une phase vapeur et une phase liquide. Le fluide diphasique contenu dans la cavité peut par exemple être de l'eau, de l'ammoniac, du méthane, de l'éthane, du propylène, du méthanol, de l'éthanol, etc.

Le dispositif de transfert de chaleur est en relation d'échange thermique d'une part avec une ou plusieurs sources dites chaudes, et d'autre part avec une ou plusieurs sources dites froides, relativement plus froide que la source de chaleur. Une source chaude correspond par exemple à une interface d'un composant générant de la chaleur, tandis qu'une source froide correspond par exemple à un radiateur. La cavité 4 de transport d'énergie calorifique comprend au moins une première zone d'échange thermique 41, prévue pour une source chaude, et au moins une deuxième zone d'échange thermique 42, prévue pour une source froide, au niveau desquelles le fluide diphasique contenu dans la cavité peut échanger de la chaleur avec l'environnement extérieur à la cavité. A cet égard, la paroi 40 de la cavité peut être formée dans lesdites zones d'un matériau thermiquement conducteur, par exemple un métal ou un alliage métallique, par exemple en aluminium.

Afin de favoriser les échanges thermiques entre la cavité et son environnement extérieur au niveau des zones d'échange thermique, la paroi 40 est par exemple thermiquement conductrice au niveau desdites zones. La cavité 4 de transport d'énergie calorifique peut par exemple comprendre une ou plusieurs zones adiabatiques 42 située(s) entre les zones d'échange thermique 41, 42, où les échanges thermiques entre le fluide diphasique présent dans la cavité et l'environnement de la structure sont limités. Une telle zone adiabatique 43 peut par exemple être prévue dans le cas où les deux zones d'échange thermique sont relativement éloignées l'une de l'autre et que l'on souhaite faire circuler le fluide diphasique entre ces zones en limitant les transferts de chaleur avec l'environnement. A cet égard, la paroi 40 de la cavité 4 de transport d'énergie calorifique peut être formée, au niveau d'une zone adiabatique, d'un matériau thermiquement isolant. Alternativement, la paroi de la cavité 4 de transport d'énergie calorifique peut être réalisée en un matériau thermiquement conducteur, par exemple le même matériau que celui utilisé dans les zones d'échange thermique, et une enveloppe thermiquement isolante additionnelle peut être ajoutée autour de la paroi pour restreindre les échanges thermiques entre la cavité et son environnement.

La structure 1 de transfert thermique comprend en outre au moins un radiateur 3 en liaison thermique avec la deuxième zone d'échange thermique 42. Dans le cas où la structure 1 est portée par un engin spatial, le radiateur 3 est avantageusement situé à l'extérieur de l'engin spatial en étant positionné et orienté de manière à recevoir aussi peu de radiations solaires que possible. Par exemple, dans le cas d'un satellite présentant une forme sensiblement parallélépipédique, comprenant des faces nord, sud, est et ouest en correspondance avec les points cardinaux de la planète autour duquel il est en orbite, le radiateur 3 est avantageusement disposé sur la face nord ou sud du satellite. Ainsi, le radiateur est apte à constituer une source froide dans au moins une première position du radiateur par rapport aux rayons du soleil, correspondant à un éclairage du radiateur par les rayons du soleil faible voire nulle. La source froide formée par le radiateur est en contact thermique par l'intermédiaire de la deuxième zone d'échange thermique 42.

En opération, la première zone d'échange thermique 41 est en liaison thermique avec une interface sur laquelle sont disposés un ou plusieurs composants 2 de l'engin spatial. Par exemple, la structure 1 peut être assemblée à une surface thermiquement conductrice en situation d'échange thermique avec le ou les composants. La structure peut également être en liaison thermique avec un circuit de circulation de fluide, lui-même en liaison thermique avec le ou les composants produisant de la chaleur. Ladite interface est donc apte à constituer une source chaude dans la première position du radiateur mentionnée ci-avant dans laquelle le radiateur se comporte effectivement en source froide, puisque l'interface est alimentée par les composants produisant de la chaleur à une température relativement plus chaude que les radiateurs quand ces radiateurs sont dans la première position.

La structure 1 comprend à l'intérieur de la cavité 4 de transfert d'énergie calorifique au moins une première structure capillaire 5, adaptée pour permettre, dans une première position par rapport aux rayonnements du soleil, la circulation d'une phase liquide du fluide entre la première zone d'échange thermique 41, prévue pour une source chaude, et une deuxième zone d'échange thermique 42, prévue pour une source froide. Une structure capillaire est une structure dont la géométrie est conformée pour engendrer des effets de tension de surface permettant ainsi de retenir et de faire circuler le liquide par capillarité. Les effets de tension de surface peuvent notamment être prédominants sur les effets de gravité ou d'inertie.

La structure capillaire 5 peut être réalisée de différentes manières. Par exemple, elle peut être formée d'un ensemble de rainures de faibles diamètres, par exemple compris entre 1 et 3 mm. En variante, elle peut être formée d'un treillis comprenant un ensemble de fibres capillaires de faible diamètre, par exemple compris entre 0.5 et 1 mm, interconnectées les unes aux autres. Selon encore une autre variante, la structure capillaire peut être un milieu poreux, par exemple en étant formée d'un matériau en apparence plein mais constitué d'une microstructure poreuse rendant ledit matériau perméable au liquide considéré.

La structure de transfert de chaleur 1 comprend en outre au moins un canal 6 de circulation de vapeur entre la première 41 zone d'échange thermique prévue pour la source chaude et la deuxième 42 zone d'échange thermique prévue pour la source froide.

La structure capillaire 5 tapisse par exemple au moins partiellement une surface interne de la paroi 40 délimitant la cavité, et le canal de circulation de vapeur 6 est agencé latéralement à la structure capillaire, ou s'étend au travers la structure capillaire. Par exemple, et comme représenté schématiquement sur les figures 1 à 2b, la structure capillaire 5 peut tapisser la surface interne de la paroi 40 sur toute sa circonférence, et entourer le canal de circulation de vapeur 6. L'exemple représenté sur les figures 1 à 2b est un cas dans lequel la structure 1 de transfert de chaleur comprend une seule cavité 4 de transport d'énergie calorifique, dans laquelle la structure capillaire 5 et le canal de circulation de vapeur sont agencés de sorte que les deux phases de fluide circulent dans des sens opposés. Cet exemple n'est néanmoins pas limitatif et d'autres géométries de la structure 1 de transfert de chaleur et dispositions relatives de la structure capillaire 5 et du canal de circulation de vapeur 6 peuvent être envisagées. On pourrait par exemple envisager une structure diphasique où le liquide et la vapeur circulent dans le même sens grâce à une structure en boucle dans laquelle une moitié de la boucle est tapissée de rainure et l'autre d'une cavité d'écoulement vapeur.

La cavité 4 de transport d'énergie calorifique est conformée de manière à n'autoriser le transfert de chaleur entre la première zone d'échange thermique 41, prévue pour une source chaude, et la deuxième zone d'échange thermique 42, prévue pour une source froide, que lorsque la deuxième zone d'échange thermique 42 est plus froide que la première zone d'échange thermique 41. En d'autres termes, la cavité 4 ne transfère la chaleur que pour refroidir la première zone d'échange thermique 41 en évacuant de l'énergie calorifique vers la deuxième zone thermique 42.

A cet effet, la structure capillaire 5 de la cavité 4 comprend une discontinuité capillaire 7, cette discontinuité capillaire 7 étant apte à être comblée par un bouchon liquide 8 en contact thermique avec le radiateur 3.

La discontinuité capillaire 7 est située entre la première zone d'échange thermique 41 et la deuxième zone d'échange thermique 42, et donc entre la source chaude et la source froide lorsque les échanges thermiques sont autorisés. Par discontinuité capillaire, on entend une séparation entre deux régions de la structure capillaire 5, cette séparation ne pouvant pas être franchie par capillarité.

Ainsi, la structure capillaire 5 comprend une première portion capillaire 50 en contact thermique avec le radiateur, cette première portion capillaire 50 étant au moins partiellement comprise dans la deuxième zone d'échange thermique 42, attenante au radiateur. La structure capillaire 5 comprend une deuxième portion capillaire 51 attenante à l'interface pour le composant générant de la chaleur. La deuxième portion capillaire 51 est au moins partiellement comprise dans la première zone d'échange thermique 41, et est en contact thermique avec le ou les composants 2. Ces première et deuxième portions 50 et 51 sont séparées l'une de l'autre par la discontinuité capillaire 7.

Par exemple, les première et deuxième portions capillaires 50, 51 peuvent être séparées l'une de l'autre d'une distance supérieure à une dimension capillaire caractéristique de la structure capillaire 5, si celle-ci est constante, ou supérieure à une dimension capillaire caractéristique maximale de la structure capillaire 5, si celle-ci est variable. On appelle « dimension capillaire caractéristique » la dimension moyenne des cavités capillaires de la structure capillaire considérée. Dans le cas où la structure capillaire est poreuse, la dimension capillaire caractéristique peut correspondre au diamètre moyen des pores. Dans le cas où la structure capillaire est formée d'un treillis de fibres capillaires, la dimension capillaire caractéristique peut correspondre au diamètre de la plus grosse particule sphérique qui pourrait passer au travers du treillis. Dans le cas où la structure capillaire est formée de rainures, la dimension capillaire caractéristique peut correspondre au diamètre minimal des rainures. Par exemple, les deux portions capillaires peuvent être séparées l'une de l'autre d'une distance supérieure ou égale à 3 mm, par exemple supérieure ou égale à 5 mm.

La discontinuité capillaire 7 est par exemple formée par un tronçon de la cavité 4 dépourvu de structure capillaire. Ce tronçon dépourvu de structure capillaire est avantageusement en communication de fluide avec le canal de circulation de vapeur 6. Par exemple, et comme représenté schématiquement sur les figures 1 à 2b, dans le cas où la structure capillaire 5 tapisse la surface interne de la paroi 40 sur tout ou partie de sa circonférence, la discontinuité capillaire 7 peut être formée par une rainure 71 s'étendant sur toute la section de la structure capillaire et s'étendant du canal de circulation de vapeur jusqu'à la paroi.

La discontinuité capillaire 7 est néanmoins apte à être comblée par un bouchon liquide 8 lorsque la deuxième zone d'échange thermique 42 correspond effectivement à une source froide, par rapport à la première zone d'échange thermique prévue pour une source chaude. A cet égard, en référence à la figure 2a, le volume de liquide présent dans la cavité 4 en excès de la structure capillaire 5, dans une plage fonctionnelle de températures déterminée, est par exemple supérieur ou égal au volume formé par la discontinuité capillaire 7 et par la partie du canal de circulation de vapeur 6 s'étendant depuis la discontinuité capillaire jusqu'à la deuxième zone d'échange thermique 42, prévue pour la source froide. En effet, lorsque la deuxième zone d'échange thermique 42 correspond effectivement à la source froide, c'est-à-dire lorsque le radiateur 3 se trouve dans l'espace mais ne reçoit pas de rayonnement solaire ou un rayonnement solaire suffisamment faible, cette deuxième zone d'échange thermique correspond à une zone de condensation du fluide diphasique et donc à une zone d'accumulation du liquide. Le liquide remplit également l'intégralité de la première portion 50 de la structure capillaire et le bouchon liquide remplit au moins la partie du canal de circulation de vapeur 6 situé entre la discontinuité capillaire 7 et la deuxième zone d'échange thermique 42, ainsi que la discontinuité capillaire elle-même.

La distance entre la discontinuité capillaire 7 et la deuxième zone d'échange thermique 42, prévue pour une source froide, d'une part, et la distance séparant les deux portions de structure capillaires 50 et 51 d'autre part, sont par exemple déterminées en fonction du dimensionnement de la cavité 4 et du volume de liquide présent dans la cavité.

Sur les figures 2a et 2b on a représenté par les lettres C et H respectivement une source froide et une source chaude, la source froide étant formée, dans la figure 2a par un radiateur non exposé aux rayonnements solaires, et les composants générant de la chaleur formant la source chaude, tandis que dans la figure 2b, on a inversé les lettres H et C pour illustrer le fait que le radiateur n'est plus suffisamment froid par rapport aux composants générant de la chaleur.

En référence à la figure 2a, le bouchon liquide 8 permet d'assurer le transfert de chaleur depuis la première zone d'échange thermique 41, formant une source chaude, vers la deuxième 42 quand cette dernière est effectivement en contact avec une source froide, c'est-à-dire le radiateur dont la température est plus froide que celle des composants. En effet, le bouchon liquide 8, en comblant la discontinuité capillaire 7, permet au liquide condensé au niveau de la deuxième zone d'échange thermique 42 d'atteindre la portion 51 de la structure capillaire située entre la discontinuité capillaire 7 et la première zone d'échange thermique 41. Le liquide est vaporisé au niveau de la première zone d'échange thermique 41 et se condense au voisinage de la deuxième zone d'échange thermique 42 : le liquide obtenu rejoint le bouchon liquide.

Ainsi lorsque le radiateur est faiblement exposé aux rayons du soleil, du fait de la position du satellite, la structure capillaire, dans la cavité fermée du dispositif de transfert de chaleur, permet d'acheminer une phase liquide par capillarité depuis la source froide vers la source chaude, ou cette phase liquide est vaporisée. La cavité fermée comprend également un ou plusieurs canaux de circulation de la phase vapeur du fluide diphasique, reliant la source chaude à la source froide, et permettant à la phase vapeur générée au niveau de la source chaude d'être acheminée jusqu'à la source froide où elle se condense. Ainsi, le fluide diphasique contenu dans la cavité du dispositif de transfert de chaleur prélève de la chaleur auprès de la source chaude où la phase liquide se vaporise, puis la vapeur ainsi obtenue se déplace vers la source froide où elle se condense, en restituant la chaleur emmagasinée à la source froide. La phase liquide obtenue par condensation est ensuite acheminée par capillarité jusqu'à la source chaude où elle se vaporise à nouveau.

En référence à la figure 2b, lorsque la deuxième zone d'échange thermique 42 ne correspond plus à une source froide, par exemple lorsque le radiateur 3 est dans une deuxième position dans laquelle il reçoit un éclairage plus important des rayons du soleil que dans la première position, le liquide présent au niveau de cette zone est évaporé et circule dans le canal de circulation de vapeur 6 jusqu'à la première zone d'échange thermique qui ne correspond plus à une source chaude 2.

Ainsi lorsque le radiateur est fortement exposé aux rayons du soleil, du fait de la position du satellite, la bulle liquide en excédant se vaporise côté radiateur pour se déplacer dans la cavité fermée du dispositif de transfert de chaleur. La bulle excédentaire de liquide n'est plus dans la zone attenante au radiateur et incorporant la rainure. La rainure est alors libérée ce qui interrompt la circulation de liquide dans la structure capillaire au moins au niveau de cette rainure. Ainsi le circuit de refroidissement ou une partie de ce circuit de refroidissement, intégrant ce radiateur, est désactivé.

En effet comme illustré à la figure 2b, dans la première zone d'échange thermique 41, le liquide se condense, mais il ne peut pas être acheminé par capillarité jusqu'à la deuxième zone d'échange thermique 42 du fait de la discontinuité capillaire 7. Le cycle de déplacement du liquide s'arrête alors et la structure 1 ne réalise plus de transfert de chaleur de la deuxième zone 42 d'échange thermique à la première 41.

Le volume de fluide diphasique est également dimensionné de sorte que le fonctionnement décrit ci-avant soit maintenu malgré des variations du volume de liquide entre un volume minimum et un volume maximum en excédent dans la cavité dans une plage fonctionnelle de températures déterminée. En particulier, lorsque le radiateur se trouve faiblement exposé aux rayons du soleil, et qu'il remplit effectivement le rôle d'une source froide, le volume de liquide en excédent peut correspondre à un maximum, tandis que lorsque le radiateur est fortement exposé aux rayons du soleil et ne remplit pas le rôle d'une source froide, le volume de liquide en excédent peut correspondre à un minimum.

Grâce à ses fonctionnements dissociés selon les expositions du ou des radiateurs aux rayonnements solaires, la structure 1 de transfert de chaleur permet d'évacuer de la chaleur dissipée par un ou des composants 2 vers l'espace, sans risque d'échauffer ces mêmes composants par transfert thermique depuis le radiateur lorsque ce dernier est fortement exposé au rayonnement solaire.

En référence à la figure 3, la structure 1 de transfert de chaleur peut en outre comprendre au moins une deuxième cavité 9 de stockage d'énergie calorifique, cette deuxième cavité 9 étant disposée entre la discontinuité capillaire et la première zone d'échange thermique 41 prévue pour un composant générant de la chaleur.

Chaque cavité 9 de stockage d'énergie calorifique permet le stockage d'une quantité de chaleur. L'engin spatial comprend par exemple un équipement optique de prise de vue, qui comprend un ou plusieurs capteurs CCD 2a, 2b, 2c.... Ces capteurs génèrent un pic de chaleur au moment d'une prise de vue, qui, si elle n'est pas évacuée ou absorbée, peut causer une augmentation de la température du capteur et en conséquence une dégradation de sa performance. Ainsi par exemple, la cavité 9 de stockage d'énergie calorifique peut être dimensionnée pour absorber la quantité de chaleur générée par le capteur lors d'une prise de vue.

En référence à la figure 4, chaque cavité 9 de stockage d'énergie calorifique est avantageusement fermée hermétiquement et séparée des autres cavités, par une paroi 90, et contient un matériau à changement de phase 91 solide/liquide ou liquide/gazeux, aux conditions de température et de pression lorsque la structure 1 est en opération. Un matériau à changement de phase peut être choisi par exemple parmi les paraffines, hydrocarbones non paraffiniques, sels hydratés, métaux, cristaux, sels eutectiques, etc.

Ainsi, le matériau contenu dans la cavité 91 de stockage d'énergie calorifique peut être présent par défaut à l'état solide, respectivement liquide, et absorber un surplus de chaleur par une transition partielle ou totale vers l'état liquide, respectivement gazeux. Le volume de la cavité de stockage d'énergie calorifique peut être supérieur au volume de matériau à changement de phase qu'elle contient lorsque le matériau est en phase solide pour un matériau à changement de phase solide/liquide, respectivement liquide pour un matériau à changement de phase liquide/vapeur, pour accommoder une variation de volume du matériau lors de sa transition vers la phase liquide, respectivement vapeur.

La cavité 9 de stockage d'énergie calorifique peut être par exemple en contact thermique avec la cavité 4 de transport d'énergie calorifique afin de permettre d'évacuer la chaleur stockée par exemple de façon temporaire. A cet égard, la paroi 90 délimitant la cavité 9 de stockage d'énergie calorifique peut être réalisée en matériau conducteur thermiquement, par exemple en métal ou alliage métallique, par exemple en aluminium.

Afin d'accroître la surface d'échange thermique entre la paroi 90 et le matériau à changement de phase contenu dans la cavité 9 de stockage d'énergie calorifique, cette cavité 9 peut par exemple contenir un treillis 91 comme représenté schématiquement sur la figure 4, le treillis étant formé en un matériau thermiquement conducteur en contact thermique avec la paroi 90. Le treillis est formé d'un agencement organisé, en trois dimensions, d'éléments de treillis unitaires reliés les uns aux autres et définissant entre eux une pluralité d'interstices. Le treillis 91 contenu dans la cavité de stockage d'énergie calorifique peut être noyé dans le matériau à changement de phase de sorte que la surface de l'ensemble des éléments unitaires du treillis forme la surface d'échange thermique entre le treillis et le matériau à changement de phase.

Un composant 2 peut par exemple être en contact thermique avec la cavité 4 de transport d'énergie calorifique, et également être situé au voisinage d'une deuxième cavité 9 de stockage d'énergie calorifique pour permettre un stockage rapide d'un excès d'énergie calorifique dégagé par le composant. Chaque cavité 9 de stockage d'énergie calorifique peut par exemple être en contact thermique avec un parmi plusieurs composants 2.

En référence à la figure 5, on a représenté un exemple de structure 1 de transfert de chaleur comprenant une pluralité de cavités 9a, 9b, 9c de stockage d'énergie calorifique pour respectivement une pluralité de composants 2a, 2b, 2c, chaque cavité de stockage d'énergie calorifique 6 étant thermiquement reliée à la première cavité 4 de transport d'énergie calorifique, et chaque cavité 6 de transport d'énergie calorifique étant située au voisinage d'un ou plusieurs composants.

## Revendications

1. Structure (1) de transfert de chaleur, apte à fonctionner en environnement spatial, réalisant un contrôle thermique pour au moins un composant (2a, 2b, 2c) disposé sur au moins une interface, comprenant :
- au moins une première cavité (4) de transport d'énergie calorifique entre au moins une source chaude et une source froide, ladite première cavité, fermée de façon étanche, comprenant au moins un canal de circulation de vapeur (6) et au moins une première structure capillaire (5) ayant un volume total déterminé et ayant une dimension capillaire plus petite que ledit canal de circulation de vapeur (6), ladite première cavité recevant un premier matériau diphasique comprenant une phase liquide et une phase vapeur et
- au moins un radiateur (3) en liaison thermique avec la cavité (4) apte à constituer ladite source froide dans au moins une première position de faible éclairage par rapport aux rayons du soleil,
- au moins ladite interface apte à constituer ladite source chaude dans ladite première position,
ladite première structure capillaire (5) comprenant au moins une discontinuité capillaire (7) ayant une dimension capillaire plus grande que celle de la première structure capillaire,
la structure (1) de transfert de chaleur étant **caractérisée en ce que** la discontinuité capillaire (7) est apte à être comblée par un bouchon liquide (8) en excès de premier matériau diphasique dans au moins ladite première position, le bouchon liquide en excès libérant ladite discontinuité capillaire dans au moins une deuxième position de fort éclairage dudit radiateur par rapport aux rayons du soleil de façon à interrompre au moins partiellement la circulation du premier matériau diphasique,
le premier matériau étant présent selon une quantité déterminée de façon à toujours avoir entre un volume minimum et un volume maximum de liquide en excédent par rapport au volume total de la première structure capillaire, dans une plage fonctionnelle de températures déterminée, et de façon à ce que le volume maximum de liquide en excédent, disposé dans une zone attenante à ladite source froide, au moins dans ladite première position, comprenne et remplisse ladite discontinuité capillaire, tandis que le volume minimum de liquide en excédent, disposé dans une zone attenante à ladite source chaude, au moins dans ladite deuxième position, libère ladite discontinuité capillaire pour former une discontinuité et interrompe la circulation du premier matériau diphasique en phase liquide.

2. Structure (1) selon la revendication 1, dans laquelle ladite première structure capillaire (5) de ladite première cavité (4) est monobloc.

3. Structure (1) selon la revendication 1 ou 2, dans laquelle ladite discontinuité capillaire est disposée entre ladite source chaude et ladite source froide.

4. Structure (1) selon l'une des revendications 1 à 3, dans laquelle la première structure capillaire (5) comprend une première portion capillaire (50) attenante audit radiateur (3) et une deuxième portion capillaire (51), lesdites portions étant situées de part et d'autre de la discontinuité capillaire (7).

5. Structure (1) selon l'une des revendications 1 à 4, dans laquelle la discontinuité capillaire (7) est formée par une rainure s'étendant sur toute une section de la première structure capillaire.

6. Structure (1) selon la revendication 5 dans laquelle ladite rainure est en communication de fluide avec le canal (6) de circulation de vapeur lorsqu'elle n'est remplie par le bouchon liquide.

7. Structure (1) selon l'une des revendications précédentes, comprenant en outre au moins une deuxième cavité (9a, 9b, 9c) de stockage d'énergie calorifique, fermée de façon étanche et recevant un deuxième matériau diphasique, comprenant une phase liquide et une phase solide ou une phase liquide et une phase gazeuse, ladite deuxième cavité étant disposée en aval de ladite discontinuité capillaire (7) par rapport au radiateur (3).

8. Structure (1) selon la revendication 7, comprenant une paroi (90) délimitant ladite deuxième cavité, la paroi étant formée en un matériau thermiquement conducteur, et la deuxième cavité (9a, 9b, 9c) comprend un treillis (92) en matériau thermiquement conducteur en continuité thermique avec ladite paroi, ledit treillis (92) comprenant un agencement en trois dimensions d'éléments unitaires reliés les uns aux autres et délimitant entre eux une pluralité d'interstices, ledit treillis étant noyé dans ledit deuxième matériau diphasique remplissant les interstices du treillis.

9. Structure (1) selon l'une des revendications 7 ou 8, dans laquelle ledit composant (2a, 2b, 2c) disposé sur son interface en contact thermique avec la première cavité de transfert d'énergie calorifique (4) et est également situé au voisinage de ladite deuxième cavité (9a, 9b, 9c) de stockage d'énergie calorifique.

10. Structure (1) selon la revendication 9, comprenant une pluralité de deuxièmes cavités (9a, 9b, 9c) de stockage d'énergie calorifique respectivement pour une pluralité de composants (2a, 2b, 2c) chacun disposé sur son interface.

11. Engin spatial (S) comprenant au moins un composant (2) et une structure (1) de transfert de chaleur selon l'une des revendications qui précèdent pour évacuer la chaleur générée par ledit composant.

## Patentansprüche

1. Wärmeübertragungsstruktur (1), die dazu geeignet ist, in einer Weltraumumgebung zu arbeiten, wobei sie eine thermische Steuerung für mindestens ein Bauteil (2a, 2b, 2c) realisiert, das an mindestens einer Schnittstelle angeordnet ist, umfassend:
mindestens einen ersten Hohlraum (4) zum Transport von Wärmeenergie zwischen mindestens einer Wärmequelle und einer Kältequelle, wobei der erste Hohlraum hermetisch verschlossen ist und mindestens einen Dampfzirkulationskanal (6) und mindestens eine erste Kapillarstruktur (5) mit einem bestimmten Gesamtvolumen und mit einer Kapillardimension aufweist, die kleiner ist als die des Dampfzirkulationskanals (6), wobei der erste Hohlraum ein erstes zweiphasiges Material aufnimmt, das eine flüssige Phase und eine Dampfphase umfasst, und
mindestens einen Strahler (3) in thermischer Verbindung mit dem Hohlraum (4), der geeignet ist, in mindestens einer ersten Position mit schwacher Beleuchtung in Bezug auf die Sonnenstrahlen die Kältequelle zu bilden,
mindestens die Schnittstelle, die geeignet ist, in der ersten Position die Wärmequelle zu bilden,
wobei die erste Kapillarstruktur (5) mindestens eine Kapillarunterbrechung (7) mit einer Kapillardimension aufweist, die größer ist als die der ersten Kapillarstruktur,
wobei die Wärmeübertragungsstruktur (1) **dadurch gekennzeichnet ist, dass** die Kapillarunterbrechung (7) geeignet ist, durch einen Flüssigkeitsstopfen (8) aus überschüssigem erstem zweiphasigem Material in mindestens der ersten Position überbrückt zu werden, wobei der überschüssige Flüssigkeitsstopfen die Kapillarunterbrechung in mindestens einer zweiten Position mit starker Beleuchtung des Strahlers in Bezug auf die Sonnenstrahlen freigibt, um die Zirkulation des ersten zweiphasigen Materials zumindest teilweise zu unterbrechen,
wobei das erste Material in einer bestimmten Menge vorhanden ist, um innerhalb eines funktionellen Temperaturbereichs immer zwischen einem Mindestvolumen und einem Maximalvolumen an überschüssiger Flüssigkeit im Verhältnis zum Gesamtvolumen der ersten Kapillarstruktur zu haben, und so, dass das Maximalvolumen an überschüssiger Flüssigkeit, das in einer an die Kältequelle angrenzenden Zone angeordnet ist, zumindest in der ersten Position die Kapillarunterbrechung umfasst und füllt, während das Mindestvolumen an überschüssiger Flüssigkeit, das in einer an die Wärmequelle angrenzenden Zone angeordnet ist, zumindest in der zweiten Position die Kapillarunterbrechung freigibt, um eine Unterbrechung zu bilden und die Zirkulation des ersten zweiphasigen Materials in der flüssigen Phase zu unterbrechen.

2. Struktur (1) nach Anspruch 1, wobei die erste Kapillarstruktur (5) des ersten Hohlraums (4) einstückig ist.

3. Struktur (1) nach Anspruch 1 oder 2, wobei die Kapillarunterbrechung zwischen der Wärmequelle und der Kältequelle angeordnet ist.

4. Struktur (1) nach einem der Ansprüche 1 bis 3, wobei die erste Kapillarstruktur (5) einen ersten Kapillarabschnitt (50), der an den Strahler (3) angrenzt, und einen zweiten Kapillarabschnitt (51) umfasst, wobei die Abschnitte auf beiden Seiten der Kapillarunterbrechung (7) angeordnet sind.

5. Struktur (1) nach einem der Ansprüche 1 bis 4, wobei die Kapillarunterbrechung (7) durch eine Nut gebildet wird, die sich über einen ganzen Abschnitt der ersten Kapillarstruktur erstreckt.

6. Struktur (1) nach Anspruch 5, wobei die Nut in Fluidverbindung mit dem Dampfzirkulationskanal (6) steht, wenn sie nicht durch den Flüssigkeitsstopfen gefüllt ist.

7. Struktur (1) nach einem der vorhergehenden Ansprüche, ferner umfassend mindestens einen zweiten Hohlraum (9a, 9b, 9c) zur Speicherung von Wärmeenergie, der hermetisch verschlossen ist und ein zweites zweiphasiges Material aufnimmt, das eine flüssige Phase und eine feste Phase oder eine flüssige Phase und eine gasförmige Phase umfasst, wobei der zweite Hohlraum stromabwärts von der Kapillarunterbrechung (7) in Bezug auf den Strahler (3) angeordnet ist.

8. Struktur (1) nach Anspruch 7, umfassend eine Wand (90), die den zweiten Hohlraum begrenzt, wobei die Wand aus einem wärmeleitenden Material gebildet ist, und der zweite Hohlraum (9a, 9b, 9c) ein Gitter (92) aus wärmeleitendem Material in thermischer Kontinuität mit der Wand umfasst, wobei das Gitter (92) eine dreidimensionale Anordnung von Einzelelementen umfasst, die miteinander verbunden sind und zwischen sich eine Vielzahl von Zwischenräumen begrenzen, wobei das Gitter in dem zweiten zweiphasigen Material eingebettet ist, das die Zwischenräume des Gitters füllt.

9. Struktur (1) nach Anspruch 7 oder 8, wobei das Bauteil (2a, 2b, 2c), das an seiner Schnittstelle in thermischem Kontakt mit dem ersten Hohlraum zur Übertragung von Wärmeenergie (4) angeordnet ist, sich auch in der Nachbarschaft des zweiten Hohlraums zur Speicherung von Wärmeenergie (9a, 9b, 9c) befindet.

10. Struktur (1) nach Anspruch 9, umfassend eine Vielzahl von zweiten Hohlräumen (9a, 9b, 9c) zur Speicherung von Wärmeenergie jeweils für eine Vielzahl von Bauteilen (2a, 2b, 2c), die jeweils an ihrer Schnittstelle angeordnet sind.

11. Raumfahrzeug (S), umfassend mindestens ein Bauteil (2) und eine Wärmeübertragungsstruktur (1) nach einem der vorhergehenden Ansprüche, um die von dem Bauteil erzeugte Wärme abzuführen.

## Claims

1. Heat transfer structure (1), adapted to operate in a space environment, providing thermal control for at least one component (2a, 2b, 2c) disposed on at least one interface, comprising:
at least one first cavity (4) for transporting calorific energy between at least one hot source and one cold source, said first cavity being sealingly closed, comprising at least one vapor circulation channel (6) and at least one first capillary structure (5) having a determined total volume and having a capillary dimension smaller than said vapor circulation channel (6), said first cavity receiving a first two-phase material comprising a liquid phase and a vapor phase and
at least one radiator (3) in thermal connection with the cavity (4), adapted to constitute said cold source in at least a first position of low illumination with respect to the sun's rays,
at least said interface being adapted to constitute said hot source in said first position,
said first capillary structure (5) comprising at least one capillary discontinuity (7) having a capillary dimension larger than that of the first capillary structure,
the heat transfer structure (1) being **characterized in that** the capillary discontinuity (7) is adapted to be bridged by a liquid plug (8) of excess first two-phase material in at least said first position, the excess liquid plug releasing said capillary discontinuity in at least a second position of high illumination of said radiator with respect to the sun's rays so as to at least partially interrupt the circulation of the first two-phase material,
the first material being present in a determined quantity so as to always have between a minimum volume and a maximum volume of excess liquid relative to the total volume of the first capillary structure, within a functional temperature range, and so that the maximum volume of excess liquid, disposed in an adjoining zone to said cold source, at least in said first position, comprises and fills said capillary discontinuity, while the minimum volume of excess liquid, disposed in an adjoining zone to said hot source, at least in said second position, releases said capillary discontinuity to form a discontinuity and interrupts the circulation of the first two-phase material in the liquid phase.

2. Structure (1) according to claim 1, wherein said first capillary structure (5) of said first cavity (4) is monolithic.

3. Structure (1) according to claim 1 or 2, wherein said capillary discontinuity is disposed between said hot source and said cold source.

4. Structure (1) according to any one of claims 1 to 3, wherein the first capillary structure (5) comprises a first capillary portion (50) adjoining said radiator (3) and a second capillary portion (51), said portions being located on either side of the capillary discontinuity (7).

5. Structure (1) according to any one of claims 1 to 4, wherein the capillary discontinuity (7) is formed by a groove extending over an entire section of the first capillary structure.

6. Structure (1) according to claim 5, wherein said groove is in fluid communication with the vapor circulation channel (6) when it is not filled by the liquid plug.

7. Structure (1) according to any one of the preceding claims, further comprising at least one second calorific energy storage cavity (9a, 9b, 9c), sealingly closed and receiving a second two-phase material, comprising a liquid phase and a solid phase or a liquid phase and a gaseous phase, said second cavity being disposed downstream of said capillary discontinuity (7) with respect to the radiator (3).

8. Structure (1) according to claim 7, comprising a wall (90) delimiting said second cavity, the wall being formed of a thermally conductive material, and the second cavity (9a, 9b, 9c) comprises a lattice (92) of thermally conductive material in thermal continuity with said wall, said lattice (92) comprising a three-dimensional arrangement of unit elements connected to each other and delimiting between them a plurality of interstices, said lattice being embedded in said second two-phase material filling the interstices of the lattice.

9. Structure (1) according to claim 7 or 8, wherein said component (2a, 2b, 2c) disposed on its interface in thermal contact with the first calorific energy transfer cavity (4) and is also located in the vicinity of said second calorific energy storage cavity (9a, 9b, 9c).

10. Structure (1) according to claim 9, comprising a plurality of second calorific energy storage cavities (9a, 9b, 9c) respectively for a plurality of components (2a, 2b, 2c) each disposed on its interface.

11. Spacecraft (S) comprising at least one component (2) and a heat transfer structure (1) according to any one of the preceding claims to evacuate the heat generated by said component.
